# NOUVEAU FASCICULE DE BREVET EUROPEEN

(11) **EP 2 720 594 B2**
(45) Date de publication et mention de la décision concernant l'opposition: **26.02.2020**
(45) Mention de la délivrance du brevet: 16.08.2017
(21) Numéro de dépôt: 12730865.8
(22) Date de dépôt: 15.06.2012
(51) Int. Cl.: A47K 10/16

(54) **ROULEAU DE PAPIER ABSORBANT DE FAIBLE ENCOMBREMENT**
KOMPAKTE ABSORBIERENDE PAPIERROLLE
COMPACT ROLL OF ABSORBANT PAPER

(30) Priorité: 15.06.2011 FR 1155244
(43) Date de publication de la demande: 23.04.2014
(73) Titulaire: SCA Tissue France, 93400 St Ouen (FR)
(72) Inventeur: GRAFF, Pierre, F-68600 Wolfgantzen (FR); DUHEN, Gérald, F-68280 Andolsheim (FR); BARREDO, Donald, F-68040 Ingersheim (FR); PROBST, Pierre, F-68770 Ammerschwihr (FR); SAAS, Pascale, F-67600 Selestat (FR)
(74) Mandataire: Gevers & Orès
(86) Numéro de dépôt international: PCT/EP2012/061522
(87) Numéro de publication internationale: WO 2012/172088

(56) Documents cités:
- EP-A1- 1 391 174
- WO-A2-02/40260
- US-A- 3 738 905
- US-A- 5 846 636
- US-A- 5 906 711
- US-A1- 2008 149 286
- US-B1- 6 681 826
- US-B2- 7 285 317
- US-B2- 7 291 379

## Description

La présente invention concerne le domaine des produits absorbants en papier destinés à l'essuyage, pour un usage notamment domestique.

### Art antérieur

Les papiers d'essuyage sont réalisés avec des fibres papetières et incorporent différents additifs dont en particulier un additif leur conférant une résistance améliorée à l'humidité. Ce type d'additif que l'on désigne par la suite additif résistant humide constitue un réseau à travers la feuille qui n'altère pas la capacité des fibres papetières à absorber les liquides tout en se substituant aux liaisons inter fibres formant le papier qui sont rompues en présence d'eau.

Dans la mesure où un produit papetier est destiné à l'essuyage, sa composition fibreuse et chimique ainsi que sa structure sont adaptées à cet usage. Par rapport à un produit similaire destiné à un usage sanitaire par exemple, il doit être à la fois plus résistant à la déchirure et avoir une meilleure capacité d'absorption des liquides.

Les papiers d'essuyage incorporent donc sur le plan chimique un agent leur conférant de la résistance à l'humidité, et sont structurés de manière à absorber une quantité maximale de liquide, aqueux en particulier. Dans ce but, selon l'art antérieur, on associe généralement entre eux deux ou plusieurs plis de papier gaufré. Les motifs de gaufrage et la déformation qu'ils induisent sont choisis pour conférer l'épaisseur la plus importante possible tout en limitant la perte de résistance mécanique induite par le gaufrage et résultant de la rupture de liaisons inter fibres le long des zones qui sont soumises aux contraintes de gaufrage. Le papier est généralement crêpé pour lui donner la capacité d'allongement nécessaire au gaufrage.

Les modes d'assemblage des plis sont globalement de deux types. Le mode d'association de type pointes contre pointes est obtenu par le gaufrage de protubérances sur chacun des plis, séparément, selon un même motif suivi de la mise en vis-à-vis des protubérances des deux plis et du collage entre eux de leurs sommets venant en contact. Selon le mode d'assemblage de type connu sous le nom « nested », les deux plis à lier sont gaufrés avec des protubérances dont les motifs sont choisis de manière à ce que les protubérances d'un pli peuvent s'imbriquer dans ceux de l'autre pli, la liaison se faisant par collage des sommets d'un pli dans le fond du motif de l'autre pli. Avec ces modes d'association l'absorption est ainsi améliorée par rapport à la feuille de base grâce aux espaces ménagés entre les deux plis. La hauteur des protubérances est cependant limitée par la perte de résistance mécanique qu'un gaufrage profond induit.

US-A-3738905 divulgue un papier comportant des valeurs de grammage, d'épaisseur, et de capacité d'absorption qui se trouvent dans les plages mentionnées dans la revendication 1. WO-A-02/40260 divulgue un rouleau de papier de type <<nested>>, le papier étant fabriqué selon la technique TAD et prenant l'image miroir de la topologie d'une toile de formation.

Les produits d'essuyage à usage domestique se présentent généralement sous la forme de rouleaux avec une feuille continue en forme de bande, éventuellement divisée en formats rectangulaires par des prédécoupes transversales, enroulée autour d'un mandrin.

### Objet de l'invention

Les dimensions des rouleaux sont maintenant standardisées, avec un diamètre et une largeur donnés. En raison de l'objectif d'absorption qui est visé par les fabricants de papier, les rouleaux présentent un volume d'espaces vides important. Il serait cependant économiquement et écologiquement intéressant de réduire ce volume tout en conservant les propriétés du produit.

Le présent déposant s'est fixé comme objectif la réalisation de rouleaux de papier d'essuyage plus compacts que les rouleaux de l'art antérieur pour une même longueur de bande de papier.

Il s'est également fixé comme objectif la réalisation de rouleaux compacts avec une feuille de papier absorbant qui conserve sensiblement les mêmes propriétés que les feuilles de l'art antérieur en termes et d'absorption et de résistance à la déchirure ou améliore cette dernière.

Une solution est trouvée, conformément à l'invention, avec un rouleau de papier d'essuyage obtenu par enroulement autour d'un mandrin, d'une feuille de papier absorbant multi-plis, la feuille comprenant au moins un premier et un second plis de papier absorbant, chacun étant de grammage compris entre 15 et 30 g/m² et au moins l'un des plis incorporant un additif résistant humide, l'épaisseur de la feuille Ep étant comprise entre 0,02 et 0,07 cm, le diamètre du mandrin étant inférieur à 3,5 cm, de préférence inférieur à 3 cm et le diamètre dudit rouleau étant compris entre 4,5 cm et 11 cm de préférence entre 4,5 cm et 9,5 cm pour un volume V de papier absorbant par unité de longueur du rouleau et la capacité d'absorption A de la feuille en grammes d'eau par gramme de papier étant supérieure à 6 cm³/g. Le rapport E=A/(Ep*V) est supérieur ou égal à 3,2.

Ce rapport exprime le fait que l'on a une capacité d'absorption optimale tout en ayant un volume du papier réduit.

L'épaisseur de la feuille est comprise de préférence entre 0,03 et 0,06 cm et la capacité d'absorption inférieure à 16 cm³/g.

De préférence, la feuille a une longueur comprise entre 8 m et 30 m et la bande formant la feuille est prédécoupée le long de lignes de séparation transversale en coupons successifs ; le nombre de coupons est compris entre 25 et 300 et leur longueur est comprise entre 100 et 300 mm. Les plis de la feuille ont des premières protubérances orientées vers l'intérieur de la feuille et au moins 15% des premières protubérances d'un pli s'imbriquent entre les premières protubérances de l'autre pli. La densité des premières protubérances est alors comprise entre 20 et 90 et de préférence entre 30 et 60.

Selon un premier mode de réalisation, le rouleau est formé d'une feuille dont au moins l'un des plis a une masse volumique d'au plus 0,15 g/cm³, ledit pli présentant des premières protubérances du type obtenu par moulage sur une toile marqueuse de la machine à papier sur laquelle le papier est fabriqué.

Plus particulièrement, les premières protubérances des plis ont une hauteur par rapport au plan de base du pli comprise entre 40 et 80% de l'épaisseur du pli et, conformément à une autre caractéristique, l'espacement dans une direction entre les premières protubérances est au moins égal à la plus grande dimension des premières protubérances selon ladite direction. Les deux plis ne sont pas calandrés et ont conservé le bouffant d'avant transformation.

Le type de papier présentant de telles caractéristiques est avantageusement obtenu par un procédé de fabrication sans compression selon lequel le séchage de la feuille est réalisé au moins en partie par un flux d'air chaud soufflé à travers l'épaisseur de la feuille. Notamment la feuille, après égouttage, et présentant un taux d'humidité approprié, est déposée sur une toile marqueuse, tissée de manière à ménager en surface des cavités. La feuille est moulée sur la toile en en épousant le relief; les fibres s'orientent en partie selon une direction perpendiculaire au plan de la toile et sont entraînées dans leur déplacement relatif par le flux d'air chaud qui est dirigé perpendiculairement à la toile. L'air entraîne au moins en partie l'humidité de la feuille et fige les fibres dans leur position. Lorsqu'elle est détachée de la toile, que l'on désigne toile marqueuse dans le domaine, la feuille présente ainsi des protubérances correspondant aux cavités de la toile. Le caractère bouffant de la feuille résulte en partie du séchage produit par le flux d'air passant au travers de la masse de fibres et en partie du moulage sur la toile marqueuse. La géométrie de la feuille moulée dépend de celle de la toile marqueuse.

Ce mode de fabrication du papier est en soi bien connu. Il est communément désigné par son acronyme en anglais TAD pour « Through Air Drying ». La feuille obtenue par cette technique est plus bouffante qu'une feuille fabriquée selon la technique avec séchage conventionnel par pressage et connu par son acronyme en anglais CWP pour « Conventional Wet Pressed ».

Cette technique de séchage TAD peut être combinée à un autre mode de séchage visant le crêpage de la feuille. Celle-ci est collée encore à l'état humide sur un cylindre sécheur dénommé Yankee puis est détachée au moyen d'une lame appropriée.

Selon un autre mode de réalisation la feuille est obtenue à partir de deux plis gaufrés et obtenus selon la technique conventionnelle dite CWP.

Conformément à une autre caractéristique, les plis sont liés entre eux, notamment par collage, le long de zones de liaison, les dites zones de liaison étant d'épaisseur réduite par rapport à celle de la feuille et formant une cavité sur chacune des deux faces de la feuille. Autrement dit, elles ne forment pas d'aspérité en surface ; elles ne sont pas proéminentes par rapport à la surface de la feuille. La liaison permet de maintenir les plis imbriqués l'un dans l'autre et assure la stabilité de la feuille double. Les zones liées sont minces par rapport aux zones non liées. Elles n'ajoutent pas d'épaisseur à la feuille. Afin d'assurer une bonne cohésion à l'assemblage des deux plis, les zones de liaison sont régulièrement réparties à la surface de la feuille. Elles occupent toutefois moins de 15% de la surface de la feuille, de préférence de 0,2 à 7% et plus particulièrement de 3% à 6%.

Conformément à une autre caractéristique, le rendement d'absorption, égal au rapport de la capacité d'absorption, mesurée en cm³ d'eau absorbée par gramme de papier, sur le volume massique, mesuré en cm³ par gramme, est supérieur à un. C'est une propriété remarquable de la feuille qui la distingue des produits gaufrés conventionnels. Selon l'art antérieur, en effet on a cherché à augmenter l'épaisseur de la feuille de papier au moyen d'un gaufrage dans le but d'améliorer l'absorption. L'expression d'un rendement d'absorption supérieur à un signifie que le gaufrage subi par les plis est limité à la liaison des plis entre eux et que l'épaisseur de la feuille a été réduite. Une telle feuille présente de façon surprenante à la fois une épaisseur réduite qui permet la mise en rouleau avec un diamètre plus faible que les rouleaux de l'art antérieur, pour une même composition fibreuse et chimique tout en conservant globalement les propriétés d'absorption. Par rapport à la feuille de base on ne constate qu'une légère réduction de la capacité d'absorption, de l'ordre de 5%. En outre, étant donné que le papier ne subit aucun gaufrage ou un gaufrage de plus faible intensité qu'un produit équivalent en termes de compositions fibreuse et chimique de l'art antérieur, les propriétés mécaniques de résistance à la déchirure sont améliorées. L'amélioration par rapport à chacun des plis résulte de la liaison entre les plis.

Le papier permet ainsi la réalisation de rouleaux compacts. Cette compacité s'exprime par la mesure du moelleux du rouleau. Elle est ici inférieure à 35 tout en étant supérieure à celle de rouleaux formés de bandes enroulées très serrées sans mandrin dont le moelleux est beaucoup faible.

L'invention porte également sur un procédé de fabrication d'un rouleau avec une feuille obtenue de la façon suivante :
- On fournit deux bandes de papier, chacune pour un desdits deux plis, les deux bandes étant disposées l'une par rapport à l'autre de manière à ce que les premières protubérances soient tournées vers l'autre bande ;
- La première bande est gaufrée sur un cylindre de gaufrage présentant des picots par application d'un cylindre en caoutchouc ; après gaufrage la hauteur de la partie proéminente formant les reliefs est inférieure à l'épaisseur de la bande de papier ;
- Un adhésif est appliqué sur les reliefs obtenus sur la première bande,
- La seconde bande est placée sur la première bande alors que la première bande est maintenue sur le cylindre de gaufrage et un cylindre marieur appliqué sur l'ensemble assure la liaison des deux bandes.

Le procédé de l'invention est caractérisé par le fait que, d'une part, la pression appliquée par le cylindre en caoutchouc et, d'autre part, la pression appliquée par le cylindre marieur permettent la liaison de deux bandes le long des zones encollées sans qu'il se forme des proéminences sur la face de la feuille contre laquelle le cylindre marieur est appliqué. De préférence, pour du TAD les deux bandes n'ont subi aucune transformation de calandrage ou autre transformation équivalente depuis la fabrication sur la machine à papier.

Selon un premier mode d'obtention de la feuille, les deux bandes sont en papier TAD.

Selon un autre mode d'obtention de la feuille, une bande, de préférence la première bande, est en papier TAD et l'autre bande est en papier de type CWP dont les premières protubérances sont obtenues par gaufrage.

Selon encore un autre mode d'obtention de la feuille, les deux bandes de papier sont de type CWP et les premières protubérances pour les deux bandes sont obtenues par gaufrage.

### Brève description des figures :

L'invention est décrite plus en détail en référence aux dessins annexés sur lesquels :
La figure 1 montre la représentation schématique en coupe transversale d'une feuille pour la réalisation d'un rouleau conforme à l'invention ;
La figure 2 représente, de façon schématique, une installation permettant de fabriquer une feuille ;
La figure 3 est une photographie d'une feuille, selon un exemple de réalisation, vue en coupe transversale ;
La figure 4 est une photographie d'un pli de la feuille de la figure 3, vu de son côté rugueux ;
La figure 5 montre un dispositif de mesure du moelleux.

### Description détaillée de l'invention

### Mode de réalisation avec une feuille de papier de type TAD

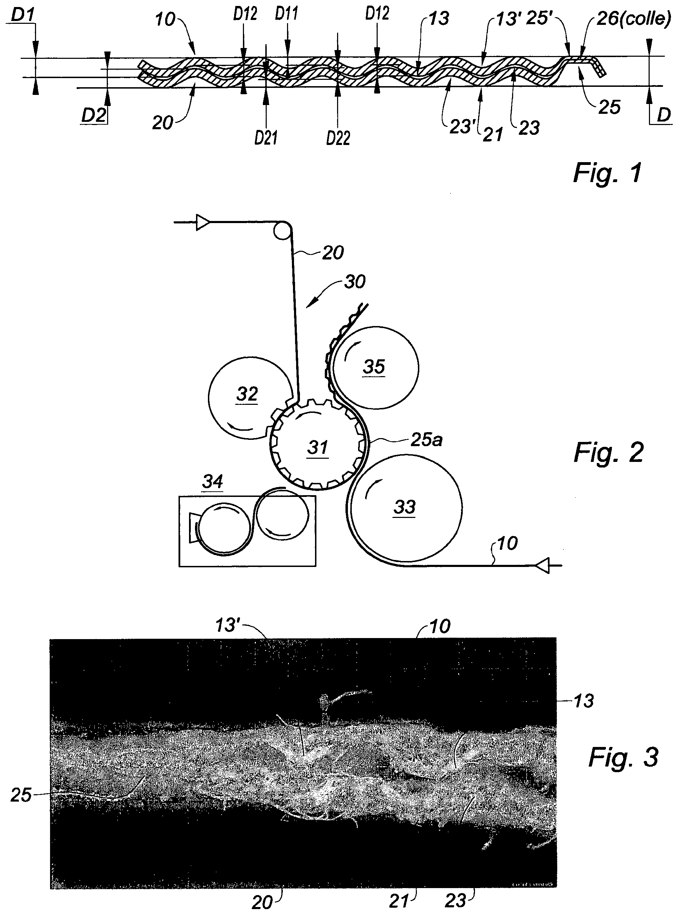

La figure 1 montre, de façon schématique, une feuille 1 pour la réalisation d'un rouleau conforme à l'invention vue en coupe transversale, l'épaisseur étant représentée sur une échelle différente par rapport à la largeur. Elle est composée de deux plis 10 et 20 en papier absorbant de qualité destinée à l'essuyage. Le papier est selon ce mode de réalisation du type TAD.

Le papier contient un additif résistant humide tel qu'une résine PAE (polyamide épichlorhydrine) connue dans le domaine.

Chaque pli présente sur la face tournée vers l'intérieur de la feuille des aspérités sous la forme de protubérances discrètes, premières protubérances 13 et 23, qui s'étendent dans une direction perpendiculaire à la base de la feuille, la base étant référencée 11 et 21 respectivement. A ces protubérances correspondent des cavités sur la face opposée, 13' et 23'. Ce relief est obtenu sur la machine à papier lorsque la feuille après sa formation et son égouttage, en aval de la caisse de tête, est déposée sur une toile dite marqueuse présentant des zones en creux. Le taux de siccité de la feuille à ce stade est compris entre 15% et 30% La structure tridimensionnelle de la surface de marquage résulte d'un tissage approprié des fils de la toile marqueuse. Les fibres papetières déposées sur cette toile dans la mesure où elles ne sont pas encore liées sont déplacées par le flux d'air traversant et prennent pour une partie une orientation ayant une composante radiale ; la conformation de la feuille au relief de la toile est figée par le séchage. Le taux de siccité de la feuille en sortie de la toile marqueuse est autour de 80%. Dans le présent exemple, la toile marqueuse est d'utilisation courante pour la fabrication de papier tissue. La toile est choisie de telle manière que la densité des protubérances obtenues sur la feuille soit comprise entre 20 et 90 protubérances, de préférence entre 30 et 60.

Le motif des premières protubérances, 13 et 23, sur les deux plis permet leur imbrication. Le sommet d'une première protubérance sur un pli est logé entre les premières protubérances sur l'autre pli. Les protubérances s'imbriquent au moins pour partie les unes dans les autres, au moins 15% et selon le motif de marquage il peut y en avoir au moins 40%. Le reste des protubérances subit un écrasement par le cylindre marieur. Cette imbrication conduit à une épaisseur D de la feuille inférieure à la somme des épaisseurs D1 et D2 de chacun des plis. On observe que l'épaisseur D1 du pli 10 est égale à l'épaisseur d11 de la masse fibreuse de la base 11 plus la hauteur d12 des premières protubérances 12. Il en est de même pour l'épaisseur du pli 20 : D2=d21+d22. L'invention comprend les cas où les protubérances des deux plis sont identiques mais aussi où les protubérances résultent de marquages sur des toiles marqueuses différentes. Ainsi d11 peut être égal ou différent de d12, et d21 peut être égal ou différent de d22.

### Méthode de mesure des hauteurs de protubérance.

La hauteur des protubérances est définie par la hauteur mesurée entre la surface du pli à la base des protubérances et le sommet de ces dernières. La méthode pour mesurer la différence de hauteur des protubérances est définie ci-après :
On dispose d'un équipement du commerce qui est adapté à la réalisation des mesures de surface d'objets tridimensionnels. Il comprend un appareil de mesure de la surface (commercialisé sous la désignation Optotop/mpe III), un programme de prise de vue à 3 dimensions (commercialisé sous la désignation Optocat), un programme d'analyse d'image (commercialisé sous la désignation Toposurf).

On place les échantillons côté « rugueux » face à l'éclairage de l'analyseur 3D de manière à étudier le pli interne de la feuille. Chaque échantillon est aplati le mieux possible pour éviter de mesurer des différences de hauteurs parasites. La surface analysée est un rectangle de 20X16 mm. On éclaire la surface par une projection de franges lumineuses. Les franges ont la même fréquence de défilement mais elles sont déphasées de π/2 d'un défilement à l'autre. Les franges sont déformées à la surface de l'objet en 3D. L'analyse de la déformation permet de calculer la hauteur de chacun des points de la surface de l'objet. On obtient un signal sinusoïdal que le logiciel Optocat traite. L'image est acquise par triangulation entre le projecteur de franges P, la feuille et la caméra numérique.

On traite ensuite les images par le logiciel Toposurf. L'image est d'abord aplatie pour compenser les déformations optiques dues à l'objectif de la caméra puis écrêtées pour supprimer les valeurs extrêmes (99,9% des données sont conservées). Une image de référence est alors obtenue. Chaque pixel de l'image est référencé dans l'espace et possède des côtes suivant les trois axes.

Les images de référence sont ensuite traitées par la fonction 'Extract a profile'. Cette fonction permet de tracer une ligne sur l'image de référence et de faire un profil de hauteur 2D suivant la droite tracée. On extrait ensuite ce profil et on calcule une différence entre la moyenne z des points hauts et la moyenne z des points bas.

Sur la feuille fabriquée avec la toile marqueuse mentionnée plus haut, la différence de hauteur mesurée selon cette méthode est de 0,186mm +/- 0.023mm.

Pour mesurer la profondeur des creux sur le pli côté « doux », cette méthode donne une différence de hauteur de 0,180mm +/- 0.021mm.

### Méthode de mesure des épaisseurs

Dans la présente demande, les épaisseurs d'un pli ou de la feuille sont définies et mesurées comme suit :
Une pile de douze échantillons de produit est disposée sur un plateau fixe, un palpeur en forme de plaque rectangulaire de surface 10 cm² est monté sur une tige coulissante mobile perpendiculairement par rapport au plateau fixe ; le palpeur est posé sur le sommet de la pile avec une vitesse de descente de 2 mm/s, puis il applique une pression de 20 g/cm² sur la feuille. A l'issue d'une durée de 5 secondes, la valeur de la distance séparant les deux plateaux est mesurée. L'épaisseur est le douzième de la valeur mesurée.

Conformément à une autre caractéristique, les deux plis de papier absorbants sont liés entre eux le long de zones de liaison 25' ; de préférence les deux plis sont liés entre eux par une pellicule de colle 26, telle qu'une colle polyvinylique. Un des deux plis, ici 20, présente des deuxièmes protubérances 25 formées par gaufrage. La hauteur de ces protubérances est inférieure à l'épaisseur D de la feuille 1 et ne forme pas d'aspérité sur la face opposée de la feuille. En fait la feuille présente dans les zones de liaison une première cavité du côté de la protubérance sur le pli 20 et une cavité de moindre profondeur sur la face opposée. La profondeur de la cavité sur la face opposée peut être aplanie comme sur la représentation de la figure 1.

Dans les zones de liaison la feuille est écrasée. Cette réduction d'épaisseur résulte de la fabrication comme on le verra dans la description du procédé plus loin.

Un mode d'association des deux plis est illustré sur la figure 2. Le procédé met en oeuvre une installation de gaufrage 30 comprenant un cylindre gravé 31, un cylindre en matériau élastomère 32 coopérant avec le cylindre gravé 31 pour gaufrer la bande de papier entre le cylindre gravé et le cylindre élastomère 32, un cylindre de détour 33, parallèle au cylindre gravé, un applicateur de colle 34 avec un cylindre applicateur coopérant avec le cylindre gravé et un cylindre marieur 35 coopérant avec le cylindre gravé. Le cylindre gravé est pourvu de picots 25a formant un motif correspondant au motif des zones de liaison que l'on souhaite réaliser sur la feuille de papier absorbant.

Le procédé est le suivant : deux bandes de papier absorbant 10 et 20 destinées à former les plis de la feuille de l'invention, sont guidées par exemple depuis des bobines mères respectives. La bande 20 passe entre le cylindre gravé 31 et le cylindre élastomère 32 où elle est gaufrée avec le motif des picots 25a ; la pression de gaufrage est suffisante pour le gaufrage des deuxièmes protubérances 25 sur la bande 20 mais la pression reste suffisamment faible pour que les deuxièmes protubérances 25 soient à peine plus hautes que les premières protubérances. On note que la bande 20 est disposée de manière à ce que les premières protubérances 23 soient du même côté que les deuxièmes protubérances 25 du cylindre gravé ; la bande 20 passe devant l'applicateur de colle 34 qui applique une pellicule de colle sur les sommets des deuxièmes protubérances 25. La bande 10 est guidée autour du cylindre de détour 33 et est mise en place sur la bande 20. Les premières protubérances 13 sont tournées vers les premières protubérances 23 de la bande 20. L'ensemble est guidé vers le cylindre marieur 35 qui est en matériau dur. La dureté du cylindre marieur empêche le gaufrage de la feuille double. La pression exercée par le cylindre marieur a pour seule fonction de lier les deux bandes par la pellicule de colle sur les deuxièmes protubérances. Lorsque la bande 10 entre en contact avec la bande 20, les premières protubérances 13 de la bande 10 se positionnent au moins pour une partie d'entre-elles entre les protubérances 23 de la bande 20 de manière à s'imbriquer entre elles. En aval du cylindre marieur, la feuille double obtenue présente la structure telle que montrée sur la figure 1.

La feuille double est ensuite guidée vers une station de mise en rouleau. La feuille qui est large est d'abord prédécoupée par une lame dentée dans le sens travers à intervalles réguliers pour former les tenons liant deux coupons successifs. La feuille est enroulée autour d'un mandrin en carton sur une longueur correspondant au nombre de coupons désiré. Comme la feuille double est mince, il n'est pas nécessaire de tirer fortement sur la feuille pour obtenir un rouleau compact.

Une fois le rouleau bobiné, des couteaux découpent le rouleau en rouleaux de plus petite longueur et ils sont conditionnés en paquets prêts à être mis dans le commerce. Le rouleau obtenu est compact avec la même longueur de bande de papier que le rouleau standard. Il permet des gains en termes de logistique avec un gain de place pendant le transport et au stockage notamment.

### Exemple de réalisation avec une feuille de papier TAD

### Feuille de base

Un papier absorbant a été fabriqué selon la technique TAD en utilisant une toile de formation marqueuse. Le papier destiné à un usage domestique pour l'essuyage incorpore divers additifs dont un additif résistant humide de type PAE.

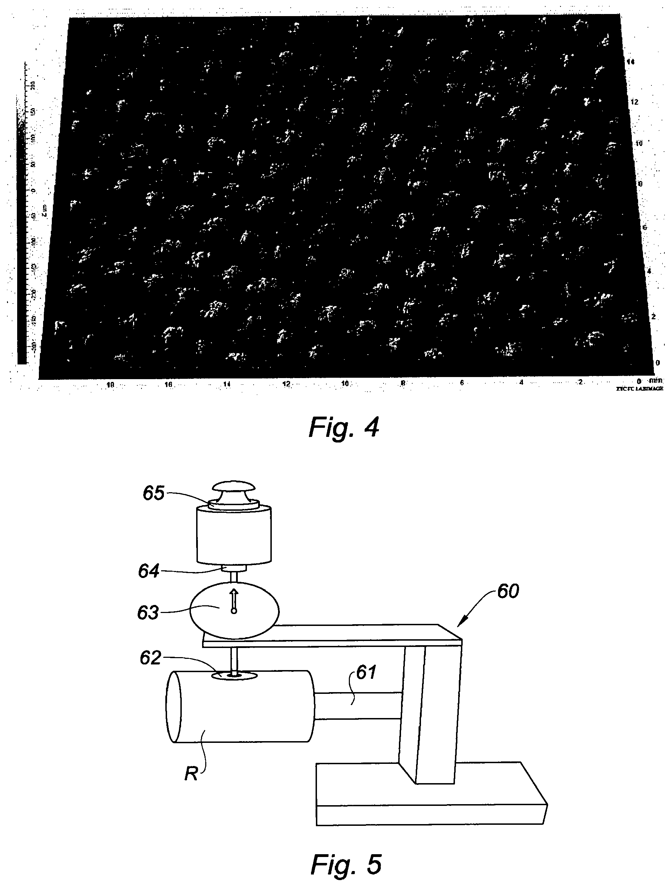

La figure 4 représente une image numérisée de la face interne des deux plis, traitée en nuances de gris ; gris foncé pour les zones d'altitude la plus faible jusqu'à gris clair pour les zones d'altitude la plus élevée. On note que les protubérances sont des zones discrètes réparties régulièrement à la surface de la feuille

Ses caractéristiques sont les suivantes :
- Masse volumique (densité) : 0,0695g/cm³ qui est le rapport de la masse surfacique sur l'épaisseur ;
- Masse surfacique : 21,7g/m²;
- Epaisseur de la feuille : 0,312mm ;
- Densité des premières protubérances (toile de formation) : 45 +/-5 par cm² ;
- Hauteur des protubérances : 0,200mm +/- 0,021 ;
- Densité surfacique des protubérances : 0,436 cm²/cm² ;
- Surface moyenne des protubérances : 0,00458 cm².

La feuille de base venue de la machine à papier a été transformée selon le procédé de l'invention pour obtenir une feuille double.
- Masse volumique de la feuille double : 0,09g/cm³
- Epaisseur de la feuille double (produit fini) : 0,47mm

Les caractéristiques de chaque pli après assemblage sont :
- Epaisseur moyenne des plis : 0,297mm,
- Densité des protubérances (toile de formation) : 45 +/-5 par cm²,
- Hauteur des protubérances : 0,186mm +/- 0,023,
- Densité surfacique des protubérances : 0,216 cm²/cm²,
- Surface moyenne des protubérances : 0,00227 cm².

Pour le pli gaufré, correspondant au pli 20 de la figure 1, la différence de hauteur mesurée entre le sommet des deuxièmes protubérances 25 du papier tissue et les premières protubérances 23 est de 0,019mm. On vérifie ainsi que le sommet des zones de liaison n'est pas proéminent par rapport à la surface de la feuille.

On constate que l'épaisseur moyenne de la feuille double est bien inférieure à la somme des épaisseurs moyennes de chacun des deux plis.

Sur un produit ainsi obtenu on a procédé à des mesures d'absorption comparatives avec un produit de l'art antérieur commercialisé par le présent déposant sous la marque Okay à la fois sur des produits fabriqués sur une ligne pilote et sur des produits fabriqués sur une ligne industrielle.

### 1) Produits réalisés sur la même ligne pilote mêmes motifs de gaufrage, mêmes recettes : compositions fibreuses et chimiques):

Les mesures des résistances ont été effectuées sur le produit selon les normes EN 12625-4 (résistance sèche) et EN 12625-5 (résistance humide).

Les mesures de l'absorption ont été effectuées selon la norme EN 12625-8.

| | OKAY | Invention |
|---|---|---|
| Grammage (g/cm²) | 0.00428 | 0.00426 |
| Epaisseur (cm) | 0.072 | 0.047 |
| Résistance sèche sens machine MD (N/m) | 389 | 492 |
| Résistance sèche sens travers CD (N/m) | 319 | 464 |
| Résistance humide sens machine MD (N/m) | 105 | 139 |
| Résistance humide sens travers CD (N/m) | 88 | 126 |
| Volume massique théorique (cm³/g) | 16,82 | 11,03 |
| Capacité d'absorption de l'eau (cm³/g) | 13,5 | 12,3 |
| Rendement d'absorption | 80% (-24% vs tissue) | 111% (+7% vs tissue) |

### 2) Produits réalisés sur ligne industrielle :

| | OKAY | Invention |
|---|---|---|
| Grammage (g/cm²) | 0,004232 | 0,00434 |
| Epaisseur (cm) | 0,0804 | 0,051 |
| Résistance sèche sens machine MD (N/m) | 375 | 581 |
| Résistance sèche sens travers CD (N/m) | 245 | 409 |
| Résistance humide sens travers CD (N/m) | 70 | 104 |
| Volume massique théorique (cm³/g) | 19 | 11,08 |
| Capacité d'absorption de l'eau (eau - cm³/g) | 14,6 | 11,75 |
| Rendement d'absorption | 77% (-20% vs tissue) | 106% (+9% vs tissue) |

On constate que, dans les deux cas, le rendement d'absorption, rapport de la capacité d'absorption sur le volume massique, est plus important pour le produit de l'invention. Le motif de gaufrage n'a pas d'influence.

On a reproduit sur la figure 3, une photographie d'une coupe transversale de la feuille agrandie 10 fois. On note que les premières protubérances 13 et 23 sont bien imbriquées majoritairement les unes dans les autres. Pour une partie de la surface des plis les premières protubérances peuvent ne pas s'imbriquer parfaitement.

Les deux plis sont liés le long d'une zone de liaison de faible épaisseur 25'. La zone de liaison ne fait pas saillie sur une face ou l'autre de la feuille ; des cavités sont présentes sur chacune des faces de la feuille, le long de la liaison 25'.

On observe aussi que les deux plis ont tendance à s'écarter l'un de l'autre en raison de la résilience du papier. La liaison permet ainsi le maintien en position l'un par rapport à l'autre des deux plis. Il suffit que la surface encollée soit inférieure à 15% et de préférence comprise entre 0,2 et 7%.

On a fabriqué des rouleaux de papier par enroulement de la feuille ainsi assemblée autour d'un mandrin de diamètre 27mm. L'enroulement a été réalisé sans exercer sur la feuille de traction particulière si ce n'est une traction suffisante pour enroulement sans serrage.

Les caractéristiques du rouleau obtenu dans cet exemple par rapport à un rouleau de l'art antérieur commercialisé par le présent déposant sous la marque Okay.

| | Okay | Invention |
|---|---|---|
| Longueur de feuille (mm) | 235 | 235 |
| Hauteur du rouleau (mm) | 230 | 230 |
| Nombre de feuilles | 43 | 43 |
| Diamètre (mm) | 106 | 77 |
| Encombrement au sol (cm²) | 88 | 47 |
| Nombre de rouleaux par m² | 113 | 214 |
| Ratio des nombres de rouleaux versus Okay | 100% | 189% |
| Volume du rouleau (cm³) | 2030 | 1071 |
| Ratio des volumes versus Okay | 100% | 53% |

On a mesuré le moelleux du rouleau après formation.

La mesure du moelleux ou dureté, en référence à la figure 6 consiste à glisser le rouleau R sur la tige 61 montée sur un support rigide 60, horizontale, en forme de broche.

On dispose un palpeur 62 sous la forme d'un disque de 30 mm de diamètre sur le rouleau, au milieu de la laize. On met en place un comparateur 63, ici de marque ROCH, et on règle à zéro son aiguille ; avec ce comparateur un tour d'aiguille correspond à un déplacement d'un mm. Sur le plateau 64 du comparateur, on pose un poids 65 de 1Kg. On note l'amplitude de l'écrasement subi par le rouleau (deux mesures sont faites sur la circonférence du rouleau). Le moelleux ou la dureté est la moyenne des deux mesures exprimées en 1/10 de mm.

Ainsi pour l'exemple de rouleaux obtenus selon l'invention, le moelleux mesuré est de 20.

A titre de comparaison le moelleux d'un produit vendu sous la marque Okay par le déposant est de 90.

### Autres modes de réalisation

Fait également partie de l'invention la réalisation le rouleau avec une feuille de papier dont les plis sont des papiers obtenus selon une technique conventionnelle de fabrication, type CWP, avec compression de la feuille puis séchage sur un cylindre sécheur, Yankee, associé a un crêpage. Chaque pli comprend un motif de gaufrage avec un motif de protubérance, connu sous le nom de micro-gaufrage, constitué de protubérances discrètes, de forme globalement tronconique ou pyramidale. La densité des protubérances est alors supérieure à 30 par cm².

Pour fabriquer une telle feuille on modifie l'installation de la figure 2 en prévoyant des cylindres de gaufrage. Par exemple le cylindre peut être un cylindre gravé avec deux motifs à des niveaux différents permettant le gaufrage simultané sur le pli des deux motifs des premières et des secondes protubérances.

Selon un autre mode de réalisation la feuille utilisée est une feuille hybride avec un pli de papier TAD tel que présenté plus haut et une feuille de papier CWP ci-dessus.

On a procédé à la fabrication de rouleaux de diamètre 7,7 sur un mandrin en carton de diamètre 2,7 cm. La quantité de papier enroulée sur le mandrin pour former le rouleau représentait un volume V de 41 cm³ par unité de longueur du rouleau en cm.

On a calculé le rapport E pour trois modes de réalisation ; une feuille TAD, une feuille hybride et une feuille CWP toutes trois d'épaisseur Ep, 0,05cm, et de capacité d'absorption A selon le tableau ci-dessous. Pour calculer E, on divise la valeur de A par l'épaisseur Ep de la feuille puis par le volume V de papier sur le rouleau par unité de longueur. Les valeurs du rapport E calculées sont indiquées sur le tableau. On a constaté que celui-ci était supérieur à 3,2.

En procédant au même calcul sur un produit du commerce Okay du présent demandeur, on a vérifié que le rapport E était inférieur à 3,2, voir tableau.

| | Diamètre rouleau (cm) | Diamètre mandrin (cm) | Volume tissue / rouleau hors mandrin (cm³) | Grammage (g/m²) | Epaisseur (cm) | Absorption (cm³/g) | E |
|---|---|---|---|---|---|---|---|
| | | | V | | Ep | A | |
| Invention 2-plis TAD | 7,7 | 2,7 | 41 | 42,6 | 0,05 | 12,3 | 6,0 |
| Invention Hybride | 7,7 | 2,7 | 41 | 40,9 | 0,05 | 11,6 | 5,7 |
| Invention x 2-plis CWP | 7,7 | 2,7 | 41 | 35 | 0,05 | 7,5 | 3,4 |
| Okay | 10,6 | 4,3 | 74 | 42,32 | 0,0804 | 14,6 | 2,5 |

## Revendications

1. Rouleau de papier d'essuyage obtenu par enroulement autour d'un mandrin, d'une feuille de papier absorbant multiplis, la feuille comprenant au moins un premier (10) et un second (20) plis de papier absorbant, chacun étant de grammage compris entre 15 et 30 g/m2 et au moins l'un des plis incorporant un additif résistant humide, l'épaisseur de la feuille Ep étant comprise entre 0,02 et 0,07 cm, le diamètre du mandrin étant inférieur à 3,5 cm, de préférence inférieur à 3 cm et le diamètre dudit rouleau étant compris entre 4,5 cm et 11 cm, de préférence entre 4,5 et 9,5 cm, pour un volume V de papier absorbant par unité de longueur du rouleau et la capacité d'absorption A de la feuille en cm3 d'eau par gramme de papier étant supérieure à 6 cm3/g, rouleau **caractérisé par le fait que** le rapport E=A/(Ep*V) est supérieur ou égal à 3,2, les plis de la feuille ayant des premières protubérances orientées vers l'intérieur de la feuille, au moins 15% des premières protubérances (13) d'un pli s'imbriquant entre les premières protubérances (23) de l'autre pli.

2. Rouleau selon la revendication précédente dont l'épaisseur de la feuille est comprise entre 0,03 et 0,06 cm.

3. Rouleau selon l'une des revendications 1 et 2 dont la capacité d'absorption de la feuille est inférieure à 16 cm3/g.

4. Rouleau selon l'une des revendications précédentes, dont la feuille a une longueur comprise entre 8 m et 30 m et la bande formant la feuille est prédécoupée le long de lignes de séparation transversales en coupons successifs, le nombre de coupons étant compris entre 25 et 300 et la longueur des coupons est comprise entre 100 et 300 mm.

5. Rouleau selon l'une des revendications 1 à 4 dont les premières protubérances sont discrètes et de densité comprise entre 20 et 90 et de préférence entre 30 et 60.

6. Rouleau selon l'une des revendications 1 à 5 dont au moins l'un des plis constituant la feuille a une masse volumique d'au plus 0,15 g/cm3, ledit pli présentant des premières protubérances (13, 23) du type obtenu par moulage sur une toile marqueuse de la machine à papier sur laquelle le papier est fabriqué.

7. Rouleau selon la revendication précédente dont pour chacun des plis les premières protubérances ont une hauteur (d12, d22) par rapport au plan de base du pli comprise entre 40 et 80% de l'épaisseur du pli.

8. Rouleau selon la revendication 7 dont, pour chacun des plis, l'espacement dans une direction entre les premières protubérances est au moins égal à la plus grande dimension des premières protubérances selon ladite direction.

9. Rouleau selon l'une des revendications 1 à 5 dont au moins l'un des plis est du type CWP.

10. Rouleau selon l'une des revendications 1 à 9 dont les plis sont liés entre eux, notamment par collage, le long de zones de liaison (25'), de préférence les dites zones de liaison ne formant pas d'aspérité en surface de la feuille.

11. Rouleau selon la revendication précédente dont les zones de liaison occupent moins de 15%, de préférence de 0,2% à 7% de la surface de la feuille et plus particulièrement de 3 à 6%.

12. Rouleau selon l'une des revendications précédentes dont pour la feuille, le rendement d'absorption égal au rapport de la capacité d'absorption, mesuré en cm3 d'eau absorbé par gramme de papier, sur le volume massique, mesuré en cm3 par gramme, est supérieur à 1, le volume massique étant inférieur à 12 cm3/g.

13. Rouleau selon l'une des revendications précédentes dont le moelleux est inférieur à 35.

## Patentansprüche

1. Wischpapierrolle, die durch Aufwickeln eines Bogens von mehrlagigem absorptionsfähigem Papier um einen Kern erhalten wird, wobei der Bogen mindestens eine erste (10) und eine zweite (20) Lage von absorptionsfähigem Papier mit jeweils einem Flächengewicht zwischen 15 und 30 g/m² umfasst und mindestens eine der Lagen ein Nassfestigkeitsadditiv enthält, wobei die Dicke des Bogens Ep zwischen 0,02 und 0,07 cm beträgt, der Durchmesser des Kerns kleiner als 3,5 cm, vorzugsweise kleiner als 3 cm ist und der Durchmesser der Rolle zwischen 4,5 cm und 11 cm, vorzugsweise zwischen 4,5 und 9,5 cm, für ein Volumen V an absorptionsfähigem Papier pro Längeneinheit der Rolle beträgt und das Absorptionsvermögen A des Bogens in cm³ Wasser pro Gramm Papier größer als 6 cm³/g ist, wobei die Rolle **dadurch gekennzeichnet ist, dass** das Verhältnis E = A/(Ep*V) größer als oder gleich 3,2 ist, wobei die Lagen des Bogens erste Vorsprünge aufweisen, die zur Innenseite des Bogens hin orientiert sind, wobei mindestens 15% der ersten Vorsprünge (13) einer Lage zwischen die ersten Vorsprünge (23) der anderen Lage verschachtelt sind.

2. Rolle nach dem vorhergehenden Anspruch, wobei die Dicke des Bogens zwischen 0,03 und 0,06 cm beträgt.

3. Rolle nach einem der Ansprüche 1 und 2, wobei das Absorptionsvermögen des Bogens weniger als 16 cm³/g beträgt.

4. Rolle nach einem der vorhergehenden Ansprüche, wobei der Bogen eine Länge zwischen 8 m und 30 m aufweist und der Streifen, der den Bogen bildet, entlang transversaler Trennlinien in aufeinanderfolgende Abschnitte vorgestanzt ist, wobei die Anzahl an Abschnitten zwischen 25 und 300 beträgt und die Länge der Abschnitte zwischen 100 und 300 mm beträgt.

5. Rolle nach einem der Ansprüche 1 bis 4, wobei die ersten Vorsprünge voneinander getrennt sind und in einer Dichte zwischen 20 und 90 und vorzugsweise zwischen 30 und 60 vorliegen.

6. Rolle nach einem der Ansprüche 1 bis 5, wobei mindestens eine der Lagen, die den Bogen bilden, eine Dichte von höchstens 0,15 g/cm³ aufweist, wobei die Lage erste Vorsprünge (13, 23) des Typs aufweist, der durch Formen auf einem Prägestoff der Papiermaschine, an der das Papier hergestellt wird, erhalten wird.

7. Rolle nach dem vorhergehenden Anspruch, wobei für jede der Lagen die ersten Vorsprünge eine Höhe (d12, d22), bezogen auf die Grundebene der Lage, von 40 bis 80% der Dicke der Lage aufweisen.

8. Rolle nach Anspruch 7, wobei für jede der Lagen der Abstand in einer Richtung zwischen den ersten Vorsprüngen mindestens gleich der größten Abmessung der ersten Vorsprünge in dieser Richtung ist.

9. Rolle nach einem der Ansprüche 1 bis 5, wobei mindestens eine der Lagen vom CWP-Typ ist.

10. Rolle nach einem der Ansprüche 1 bis 9, wobei die Lagen miteinander, insbesondere durch Verklebung, entlang von Verbindungszonen (25') verbunden sind, wobei die Verbindungszonen vorzugsweise keine Oberflächenrauhigkeit des Bogens bilden.

11. Rolle nach dem vorhergehenden Anspruch, wobei die Verbindungszonen weniger als 15%, vorzugsweise von 0,2% bis 7% der Oberfläche des Bogens und insbesondere von 3 bis 6% einnehmen.

12. Rolle nach einem der vorhergehenden Ansprüche, wobei für den Bogen die Absorptionseffizienz, entsprechend dem Verhältnis des Absorptionsvermögens, gemessen in cm³ Wasser, die pro Gramm Papier absorbiert werden, zur Dichte, gemessen in cm³ pro Gramm, größer als 1 ist, wobei die Dichte kleiner als 12 cm³/g ist.

13. Rolle nach einem der vorhergehenden Ansprüche, wobei die Flauschigkeit weniger als 35 Zehntel mm beträgt.

## Claims

1. Roll of wiping paper obtained by winding a sheet of multi-ply absorbent paper around a core, the sheet comprising at least a first (10) and a second (20) ply of absorbent paper, each with a grammage of between 15 and 30 g/m² and at least one of the plies incorporating a wet strength additive, the thickness of the sheet Ep being comprised between 0,02 and 0,07 cm, the diameter of the core being less than 3,5 cm, preferably less than 3 cm and the diameter of said roll being comprised between 4,5 cm and 11 cm, preferably between 4,5 and 9,5 cm for a volume V of absorbent paper per unit length of the roll and the absorbency A of the sheet in cm³ of water per gram of paper being greater than 6 cm³/g, the roll being **characterized in that** the ratio E=A/(Ep*V) is greater than or equal to 3,2, the plies of the sheet having first protuberances directed towards the inside of the sheet, at least 15% of the first protuberances (13) of a ply being nested between the first protuberances (23) of the other ply.

2. Roll according to the preceding claim wherein the thickness of the sheet is comprised between 0,03 and 0,06 cm.

3. Roll according to claims 1 and 2 wherein the absorbency of the sheet is less than 16 cm³/g.

4. Roll according to one of the preceding claims, wherein the sheet has a length of between 8 m and 30 m and the strip forming the sheet is precut along transverse separating lines into successive individual lengths, the number of individual lengths being between 25 and 300 and the length is between 100 and 300 mm.

5. Roll according to one of claims 1 to 4 wherein the first protuberances are separate and the density is between 20 and 90 and preferably between 30 and 60.

6. Roll according one of claims 1 to 5 wherein at least one of the plies forming the sheet has a density of at most 0,15 g/cm3, said ply having first protuberances (13, 23) of the type obtained by moulding on an imprinting fabric of the papermaking machine on which the paper is manufactured.

7. Roll according to the preceding claim wherein the first protuberances of each of the plies have a height (d12, d22), relative to the base plane of the ply, between 40 and 80% of the thickness of the ply.

8. Roll according to claim 7 wherein for each of the plies, the spacing in a direction between the first protuberances is at least equal to the largest dimension of the first protuberances in said direction.

9. Roll according to one of claims 1 to 5 wherein at least one of the plies is of the CWP type.

10. Roll according to claims 1 to 9 wherein the plies are joined together, particularly by gluing, along joining zones (25'), preferably said joining zones not forming any unevenness on the surface of the sheet.

11. Roll according to the preceding claims wherein the joining zones take up less than 15%, preferably 0,2% to 7% of the surface of the sheet and more particularly from 3 to 6%.

12. Roll according to one of the preceding claims wherein for the sheet, absorption efficiency of the sheet, equivalent to the ratio of the absorbency, measured in cm³ of water absorbed per gram of paper, to the density, measured in cm³ per gram, is greater than 1, the density being less than 12 cm³/g.

13. Roll according to one of the preceding claims wherein the softness of the sheet is less than 35 tenth of mm.
